# EUROPÄISCHE PATENTANMELDUNG

(11) **EP 0 947 679 A2**
(43) Veröffentlichungstag der Anmeldung: **06.10.1999**
(21) Anmeldenummer: 99103747.4
(22) Anmeldetag: 26.02.1999
(51) Int. Cl.: F02B 37/16, F02B 37/24, B60H 1/03, F02B 29/04, F01N 5/04, F02M 31/16, F01M 5/00

(54) **Brennkraftmaschine mit VTG-Lader und Verfahren zum Betrieb einer mittels VTG-Laders aufgeladenen Brennkraftmaschine**

(30) Priorität: 28.03.1998 DE 19813944
(71) Anmelder: DaimlerChrysler AG, 70567 Stuttgart (DE)
(72) Erfinder: Rumez, Werner Dr., 75417 Mühlacker (DE); Schmidt, Erwin, 73666 Baltmannsweiler (DE); Sumser, Siegfried, 70184 Stuttgart (DE)

(57) **Zusammenfassung**

Bei Brennkraftmaschinen mit einem Abgasturbolader treibt eine Turbine mit verstellbarer Turbinengeometrie einen Verdichter an, welcher einen Ladeluftmassenstrom durch eine Ladeluftleitung zum Einlaß der Brennkraftmaschine fördert. Ein Lastregler bringt die Turbinengeometrie in eine betriebspunktspezifische Stellung, wobei der Anströmquerschnitt auf die Turbine mit zunehmender Betriebslast der Brennkraftmaschine verringert wird.

Erfindungsgemäß ist vorgesehen, eine Wärmebilanz der von der Brennkraftmaschine zu erzeugenden und im Betrieb benötigten Wärmemenge mit der verstellbaren Turbinengeometrie als Regelungsstellglied zu überwachen, wobei zur Erhöhung der Wärmeabgabe der Brennkraftmaschine der Anströmquerschnitt auf die Turbine verringert wird. Außerdem wird vorgeschlagen, in der Ladeluftleitung mindestens einen Wärmetauscher anzuordnen, dessen sekundärer Arbeitsmittelstrom einem Nutzaggregat für eine Heizanwendung, beispielsweise zur Erwärmung des Maschinenschmieröls zugeführt wird.

## Beschreibung

Die Erfindung betrifft ein Verfahren zum Betrieb einer Brennkraftmaschine mit einem Abgasturbolader, dessen Turbine eine verstellbare Turbinengeometrie aufweist, nach dem Oberbegriff des Patentanspruchs 1 und eine Brennkraftmaschine der im Oberbegriff des Patentanspruchs 13 genannten Gattung.

Die Leistungsabgabe einer Brennkraftmaschine ist proportional dem Luftdurchsatz und der Dichte der zugeführten Verbrennungsluft und ist daher durch Vorverdichtung der Verbrennungsluft vor dem Eintritt in die Brennkraftmaschine gegenüber einer Brennkraftmaschine ohne Aufladung und dabei gleichem Brennraumvolumen erhöhbar. Die Aufladung erfolgt durch einen Abgasturbolader, welcher im wesentlichen aus zwei Strömungsmaschinen besteht, nämlich einer vom Abgassrtom getriebenen Turbine und einem von der Turbine angetriebenen Verdichter, welcher einen Frischluftstrom für die Brennkraftmaschine vorverdichtet. Die Turbine und der Verdichter sind durch eine Laderwelle verbunden und rotieren synchron. Des Massenstrom der vorverdichteten Ladeluft hängt ab von des Drehzahl des Verdichters. Der Ladeluftmassenstrom wird durch eine Ladeluftleitung zum Einlaß der Brennkraftmaschine gefördert.

Der Ladedruck stromab des Verdichters und der Abgasdruck stromauf der Turbine wirken infolge des Momentengleichgewichtes an der Ladewelle wechselseitig aufeinander ein. Infolge des auf den Verdichter wirkenden Ladedruckes wird das Abgas stromauf der Turbine aufgestaut und der Staudruck des Abgasstromes entsprechend dem Druckübersetzungsverhältnis des Abgasturboladers, welches durch die jeweiligen Strömungsquerschnitte der Turbine und des Verdichters bestimmt ist, in Ladedruck in der Ladeluftleitung übersetzt.

Die zur Gemischbildung mit der Ladeluft erforderliche Kraftstoffmenge pro Arbeitsspiel der Brennkraftmaschine wird dem momentanen Luftdurchsatz der Brennkraftmaschine entsprechend zugemessen. Mit zunehmender Leistung der Brennkraftmaschine nimmt der Ladeluftbedarf zu, so daß ein entsprechend höherer Ladedruck erzeugt werden muß. Mittels einer verstellbaren Turbinengeometrie, z. B. durch verstellbare Leitschaufeln der Turbine, wird der Anströmquerschnitt der Turbine und somit die vom Verdichter auf den Ladeluftstrom zu übertragende Staudruckenergie variiert. Ein Lastregler steuert einen auf die Turbinengeometrie einwirkenden Stellantrieb an und bringt die Turbinengeometrie in eine betriebspunktspezifische Stellung, welche den vorgesehenen Ladeluftdurchsatz ergibt. Der Anströmquerschnitt wird dabei mit zunehmender Maschinenleistung reduziert, so daß mit einer entsprechend höheren Laderdrehzahl die Verdichterleistung und damit der Ladeluftmassenstrom durch die Ladeluftleitung zur Brennkraftmaschine dem jeweils vorliegenden Betriebszustand angepaßt ist.

Im Betrieb von aufgeladenen Brennkraftmaschinen bestand bisher das Problem, daß insbesondere bei tiefen Umgebungstemperaturen die ideale Betriebstemperatur der Brennkraftmaschine nur schwer erreicht werden kann und nicht die volle Leistungsfähigkeit der Brennkraftmaschine zur Verfügung steht. Darüberhinaus sind sehr lange Warmlaufphasen der Brennkraftmaschine zu beobachten, welche bei Ansaugen sehr kalter Frischluft noch verlängert werden. Dabei wird auch die Inbetriebnahme von Nebenaggregaten der Brennkraftmaschine, welche die Motorabwärme nutzen, beispielsweise eine Kabinenheizung eines Fahrzeuges, verzögert.

Der vorliegenden Erfindung liegt die Aufgabe zugrunde, eine Beeinflussung der Wärmeerzeugung der Brennkraftmaschine und eine Überwachung der Wärmebilanz der benötigten Wärmemenge zu ermöglichen.

Diese Aufgabe wird erfindungsgemäß bei einem Verfahren mit den Merkmalen des Patentanspruchs 1 und bei einer Brennkraftmaschine mit den Merkmalen des Anspruchs 13 gelöst.

Die Wärmebilanz wird erfindungsgemäß von einem Wärmeregler überwacht, wobei die verstellbare Turbinengeometrie das Regelungsstellglied bildet. Stellt der Wärmeregler fest, daß die Wärmeabgabe der Brennkraftmaschine erhöht werden muß, so wird der Anströmquerschnitt auf die Turbine durch Verstellung der Turbinengeometrie verringert. Ausgehend von der Stellung der Turbinengeometrie, die der Lastregler für den vorliegenden Betriebspunkt der Brennkraftmaschine vorgibt, wird der Anströmquerschnitt auf die Turbine zur Erhöhung der Wärmeabgabe zusätzlich verringert. Der Verdichter fördert daher einen erhöhten Ladeluftmassenstrom zum Einlaß der Brennkraftmaschine. Durch die starke Verengung des variablen Durchtrittsquerschnitts der Turbine wird der Ladungswechsel der Brennkraftmaschine unmerklich verschlechtert, da dem erhöhten Luftdurchsatz entsprechend eine erhöhte Kraftstoffmenge in den Zylindern der Brennkraftmaschine verbrennt, ohne dabei Nutzarbeit zu verrichten. Die überhöhte Zumessung der Kraftstoffmenge pro Arbeitsspiel über das erforderliche Maß führt dabei insbesondere in der Motoraufwärmphase zu einer raschen Erwärmung der Brennkraftmaschine.

Die Folge der zusätzlichen Verringerung des Anströmquerschnittes auf die Turbine ist ein Anstieg des Turbineneinstrittsdruckes und der Eintrittstemperatur. Auch in Betriebsbereichen der Brennkraftmaschine mit geringen Turbinenwirkungsgraden wird durch das relativ hohe einstellbare Turbinendruckverhältnis die Turbinenleistung merklich erhöht, wodurch das Verdichterdruckverhältnis und die Verdichteraustrittstemperatur mit ansteigt. Erfindungsgemäß ist vorgesehen, dem Ladeluftmassenstrom mittels mindestens eines Wärmetauschers Wärme zu entziehen und auf einen Arbeitsmittelstrom zu übertragen, welcher einem Nutzaggregat für eine Heizanwendung zugeführt wird. Der Verdichter saugt kühle Frischluft an und hebt die thermischen Zustandsgrößen der Ansaugluft, nämlich Druck und Temperatur bei der Verdichtung auf ein höheres Niveau. Die mittels des Verdichters erhaltene Wärmemenge wird durch den Wärmetauscher mit größtmöglichem Wirkungsgrad auf den Arbeitsmittelstrom übertragen und dem Nutzaggregat zur Verwertung zugeführt. Durch die weitere Zustellung der Turbinengeometrie in Richtung Schließstellung mit minimalem Anströmguerschnitt auf die Turbine läßt sich die Temperatur der Ladeluft einstellen, wobei eine Temperatur einregelbar ist, welche für den Betrieb des Nutzaggregates optimal ist. Der Wärmeregler zieht den Wärmebedarf des Nutzaggregates in die Ermittlung der Wärmebilanz ein und verändert durch Verstellung der Turbinengeometrie die Temperatur der Ladeluft.

Vorteilhaft bestimmt der Wärmeregler den Durchsatz des Wärmetauschers mit Ladeluft durch abgestimmte Einstellungen eines Drosselventils im Zulauf des Wärmetauschers und eines Bypassventils in einem den Wärmetauscher umgehenden Bypassleitungszweig. Durch die erfindungsgemäße Überwachung der Wärmebilanz und der zusätzlichen Wärmeerzeugung durch Zustellung der Turbinengeometrie können auch mehrere Nutzaggregate mit jeweils zugeordneten Wärmetauschern gespeist werden, deren Wärmezufuhr unabhängig voneinander durch den Wärmeregler eingestellt wird. Für eine Nutzanwendung der der Ladeluft entzogenen Wärmemenge zur Öl- oder Kraftstoffaufwärmung kann die Ölwanne und/oder der Kraftstofftank der Brennkraftmaschine doppelwandig und so vom Arbeitsmittelstrom durchströmbar ausgebildet werden. Die Wärmeübertragung auf das Öl/den Kraftstoff kann auch durch Strömungskanäle in der Tankwandung, die das Arbeitsmittel führen, gewährleistet werden. Wirkungsvoll stellt auch ein Wärmetauscher die wärmeübertragende Verbindung zwischen dem Arbeitsmittelstrom und dem zu erwärmenden Fluid her. Vorteilhaft kann auch die sehr schnell verfügbare Wärmemenge abströmseitig des Verdichters zur unmittelbaren Aufheizung einer Fahrgastkabine eines von der Brennkraftmaschine getriebenen Fahrzeuges oder zur Scheibenenteisung des Fahrzeuges herangezogen werden. Die heiße Ladeluft ließe sich auch zur Aufwärmung des Kühlmittels der Brennkraftmaschine auf die gewünschte Betriebstemperatur nutzen.

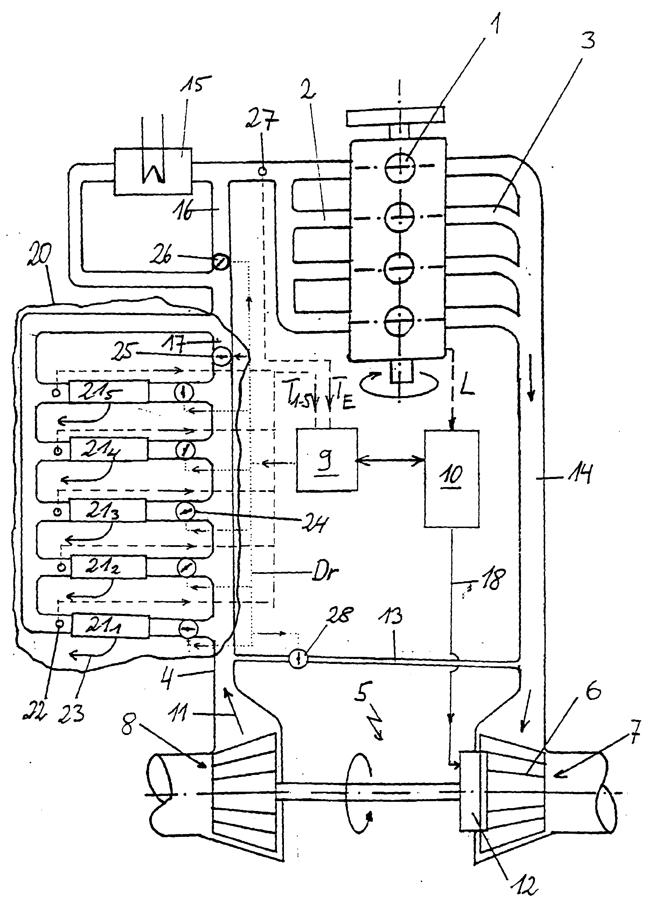

Ein Ausführungsbeispiel der Erfindung ist in der nachstehenden Beschreibung anhand der Zeichnung näher erläutert.

Die einzige Zeichnungsfigur zeigt eine Brennkraftmaschine 1 mit einem Abgasturbolader 5 zur Erzeugung eines verdichteten Ladeluftmassenstroms 11 im Einlaßtrakt 2 der Brennkraftmaschine 1. Der Abgasturbolader 5 besteht aus zwei Strömungsmaschinen, nämlich einer Turbine 7 und einem Verdichter 8, welche durch eine Laderwelle mechanisch starr verbunden sind und synchron umlaufen. Die Turbine 7 ist in der Abgasleitung 14 der Brennkraftmaschine angeordnet und wird von den Abgasen, welche im Auslaßtrakt 3 der Brennkraftmaschine gesammelt werden, beaufschlagt und angetrieben. Der Verdichter 8 ist in einer Ladeluftleitung angeordnet, welche zum Einlaß 2 der Brennkraftmaschine 1 führt. Die Strömungsenergie des Abgasstromes wird entsprechend dem Verhältnis zwischen Abgasstaudruck vor der Turbine 7 und dem Ladedruck stromab des Verdichters 8, d. h. in Abhängigkeit von dem Verhältnis der jeweiligen Anströmquerschnitte der beiden Strömungsmaschinen auf den vom Verdichter 8 erzeugten Ladeluftmassenstrom 11 übertragen.

Mittels Verstellung der Turbinengeometrie ist der Anströmquerschnitt auf die Turbine 7 variierbar. Durch eine Verringerung des Anströmquerschnittes auf die Turbine 7 wird eine Beschleunigung des Abgasturboladers 5 veranlaßt, wobei gleichzeitig die Verdichterleistung ansteigt und ein höherer Ladeluftmassenstrom 11 vom Verdichter zum Einlaß 2 der Brennkraftmaschine 1 gefördert wird. Mit zunehmender Betriebslast der Brennkraftmaschine ist somit ein entsprechend höherer Ladedruck bzw. ein höherer Ladeluftmassenstrom 11 erzeugbar, so daß ein Luftdurchsatz der Brennkraftmaschine entsprechend der gewünschten Leistungsabgabe eingestellt wird. Ein Stellantrieb 12 wirkt auf die verstellbare Turbinengeometrie 6 der Turbine 7 ein. Im Ausführungsbeispiel ist das Turbinenleitgitter mit seinen Leitschaufeln variabel verstellbar, um die Turbinengeometrie und das Durchströmungsverhalten der Turbine 7 zu beeinflussen.

Ein Lastregler 10 steuert den Stellantrieb 12 an und bringt die Turbinengeometrie in eine betriebspunktspezifische Stellung. Der Lastregler 10 erzeugt ein Stellsignal 18, welches den Stellantrieb 12 zur Ausführung der erforderlichen Stellbewegung zur Einnahme der angeforderten Leitgitterstellung veranlaßt. Auf den Stellbefehl des Lastreglers wird ein Aßströmquerschnitt auf die Turbine 7 zur Beaufschlagung mit dem Abgasstrom freigegeben, welcher mit dem festgelegten Strömungsquerschnitt des Verdichters 8 ein bestimmtes Druckübersetzungsverhältnis bildet, mit dem der in einem beliebigen Betriebszustand der Brennkraftmaschine 1 erforderliche Ladeluftmassenstrom erzeugt wird.

Jedem Betriebspunkt der Brennkraftmaschine 1 ist ein bestimmter Anströmquerschnitt der Turbine 7 zugeordnet, welcher mit zunehmender Betriebslast abnimmt, so daß mit einer Erhöhung des Staudruckes vor der Turbine 7 die Drehzahl des Abgasturboladers 5 und somit die Verdichterleistung erhöht wird. Die jeweils einem bestimmten Betriebszustand der Brennkraftmaschine zugeordneten Einstellungen der Turbinengeometrie 6 sind in einem hier nicht dargestellten Kennfeld abgelegt, dem der Lastregler 10 die dem jeweils vorliegenden Lastzustand entsprechenden Einstellungen der Turbinengeometrie entnimmt. Der vorliegende Betriebszustand der Brennkraftmaschine 1 wird dem Lastregler 10 durch Eingabe eines Lastsignales L angezeigt.

Im Betrieb der Brennkraftmaschine überwacht ein Wärmeregler 9 eine Wärmebilanz der von der Brennkraftmaschine 1 zu erzeugenden und im Betrieb benötigten Wärmemenge mit der verstellbaren Turbinengeometrie 6 als Regelungsstellglied. Zur Erhöhung der Wärmeabgabe der Brennkraftmaschine wird der Anströmquerschnitt auf die Turbine 7 durch Verstellung der Turbinengeometrie verringert. Durch die Verengung des Apströmquerschnittes auf die Turbine 7 wird die Drehzahl des Abgasturboladers erhöht und eine dem verstärkten Luftdurchsatz entsprechend erhöhte Kraftstoffmenge pro Arbeitsspiel in die Brennkraftmaschine eingespritzt. Der zusätzlich eingespritzte Kraftstoff verbrennt in den Zylindern ohne zu einer Leistungserhöhung der Brennkraftmaschine zu führen und verursacht eine verstärkte Wärmeentwicklung. Insbesondere in der Motorwarmlaufphase nach der Inbetriebnahme der Brennkraftmaschine kann durch die erfindungsgemäße Maßnahme der zusätzlichen Verengung des Anströmquerschnittes die Brennkraftmaschine rasch auf die Betriebstemperatur gebracht und die Wärmebilanz ausgeglichen werden. Die Verkürzung des Motorwarmlaufs wirkt sich insbesondere in kalten Jahreszeiten oder bei einem Betrieb in nördlichen Gebieten günstig aus. Dem Wärmeregler kann die Betriebstemperatur der Brennkraftmaschine 1 eingegeben werden, um daraus ein Vergleich mit einer gewünschten Betriebstemperatur die Wärmebilanz zu ermitteln.

Der Wärmeregler 9 steht mit dem Lastregler 10 wechselseitig über eine Signalleitung in Verbindung, wobei der Wärmeregler 9 dem Lastregler 10 die zur Erhöhung der nutzbaren Wärmeerzeugung vorgesehene Verstellung der Turbinengeometrie übermittelt und ein Signal mit Aussage über die erforderliche Verringerung des Anströmquerschnitts der Turbine 7 eingibt. Der Lastregler 10 errechnet aus der betriebspunktabhängigen Einstellung der Turbinengeometrie und der vom Wärmeregler 9 verlangten zusätzlichen Verstellung die optimale Einstellung der Turbinengeometrie 6 und erzeugt ein entsprechendes Stellsignal 18 für den Stellantrieb 12. Bei der Berechnung der zusätzlichen Verstellung der Turbinengeometrie zur Erhöhung der Wärmeerzeugung berücksichtigt der Wärmeregler 9 die momentanen Einstellungsdaten der Turbinengeometrie 6 und des Betriebspunktes der Brennkraftmaschine 1, welche ihm von dem Lastregler 10 zugeleitet werden.

Die gezielte Veränderung der nutzbaren Wärmeerzeugung der Brennkraftmaschine 1 durch die Verstellung der Turbinengeometrie wird im gezeigten Ausführungsbeispiel für weitere Nutzanwendungen herangezogen, wobei dem Ladeluftmassenstrom 11 Wärme entzogen wird und zur Verrichtung von Nutzarbeit verwendet wird. Die Ladeluft kann durch Wärmetauscher 21₁₋₅ geleitet werden, welche sekundärseitig von jeweils einem Arbeitsmittelstrom 23 durchströmbar sind. Dem Ladeluftmassenstrom 11 wird bei der Durchströmung des Wärmetauschers Wärme entzogen und auf den Arbeitsmittelstrom 23 übertragen, welcher einem Nutzaggregat für eine Heizanwendung zugeführt wird. Durch die Verengung des variablen Turbinenleitgitters steigt der Turbineneintrittsdruck und die Eintrittstemperatur des Abgasstroms in die Turbine und selbst bei schlechten Turbinenwirkungsgraden wird dadurch die Turbinenleistung merklich erhöht, wodurch das Verdichterdruckverhältnis (Ausgangsdruck/Eingangsdruck) und damit auch die Verdichteraustrittstemperatur entsprechend ansteigt. Durch die Verstellung der Turbinengeometrie kann somit gezielt die Verdichteraustrittstemperatur und somit die Ladelufttemperatur beeinflußt werden.

Im gezeigten Ausführungsbeispiel sind mehrere Nutzaggregate mit jeweils zugeordneten Wärmetauschern 21₁₋₅ vorgesehen, deren Wärmezufuhr unabhängig voneinander durch den Wärmeregler 9 eingestellt wird. Ein Wärmetauscher 21₁ ist dabei der Vorwärmung des Schmieröls der Brennkraftmaschine 1 zugeordnet, wobei der von diesem Wärmetauscher 21₁ erwärmte Arbeitsmittelstrom 23 einer doppelwandig ausgebildeten Ölwanne zugeleitet wird. In der Wandung der Ölwanne können Kanäle ausgebildet sein, durch die der Arbeitsmittelstrom geleitet wird und die Wandung und das Schmieröl erwärmt. Der warme Arbeitsmittelstrom eines weiteren Wärmetauschers 21₂ wird zur Kraftstofferwärmung eingesetzt und wird beispielsweise durch einen gleichfalls doppelwandig ausgebildeten Kraftstofftank oder durch die Einspritzanlage der Brennkraftmaschine geleitet. Ein weiterer Wärmetauscher 21₃ ist einer Heizungseinrichtung zugeordnet, welche bei einem von der Brennkraftmaschine getriebenen Fahrzeug zur Beheizung der Fahrgastzelle oder zur Scheibenbeheizung eingesetzt wird. Bei kalten Witterungsbedingungen ist somit eine schnelle Scheibenenteisung möglich. Der warme Arbeitsmittelstrom eines weiteren Wärmetauschers 21₄ ist mit dem Kühlmittelkreislauf der Brennkraftmaschine 1 gekoppelt. Im Ausführungsbeispiel ist zudem ein Wärmetauscher 21₅ vorgesehen, welcher einem Wärmespeicher zugeordnet ist. Dabei kann Abgaswärme gespeichert werden, welche zur zusätzlichen Luftaufheizung z. B. für das Motorteillastgebiet verwendet werden kann, wodurch die Kohlenwasserstoffemission niedrig gehalten werden kann. Die speicherbare Abgaswärme wird mittels Abgasrückführung, deren Steuerung an die Wärmeverteilungsregelung gekoppelt ist und weiter unten näher erläuter ist, in die Ladeluft eingebracht.

Der Wärmeregler 9 bezieht den Wärmebedarf der jeweiligen Nutzaggregate in die Ermittlung der Wärmebilanz ein und verändert ggf. die Temperatur der Ladeluft durch Verstellung der Turbinengeometrie. Der Durchsatz jedes Wärmetauschers 21₁₋₅ mit Ladeluft wird von dem Wärmeregler 9 bestimmt. Die Wärmetauscher 21₁₋₅ sind in parallelen Leitungszweigen der Ladeluftleitung 4 angeordnet, wobei im Zulauf jedes Wärmetauschers 21₁₋₅ ein Drosselventil 24 vorgesehen ist, welche jeweils von dem Wärmeregler 9 mit einem Stellsignal Dᵣ angesteuert werden. Durch geeignete Einstellung der Drosselventile 24 können unterschiedliche Teilströme der Ladeluft durch die einzelnen Wärmetauscher 21₁₋₅ geleitet werden und somit die jeweils erforderliche Wärmezufuhr zu den Nutzaggregaten sichergestellt werden. Die jeweils mit einem Wärmetauscher 21₁₋₅ versehenen parallelen Leitungszweige sind in einem Wärmeverteilungsabschnitt 20 der Ladeluftleitung 4 ausgebildet. Der Wärmeverteilungsabschnitt 20 umfaßt weiter einen Bypassleitungszweig 17, durch den der Ladeluftmassenstrom 11 unter Umgehung aller Wärmetauscher 21₁₋₅ geleitet werden kann. In dem Bypassleitungszweig 17 ist ein Bypassventil 25 angeordnet, dessen Drosselquerschnitt ebenso von dem Wärmeregler 9 eingestellt wird. Der Wärmeregler 9 bestimmt die anteilige Wärmezufuhr der Nutzaggregate durch Einstellung des Ladeluftdurchsatzes der jeweils zugeordneten Wärmetauscher 21₁₋₅ durch aufeinander abgestimmte Einstellung der Drosselventile 24. Ist das Wärmeangebot des zugeführten Ladeluftmassenstroms 11 größer als der Wärmebedarf der Nutzaggregate, d. h. es liegt eine unausgeglichene Wärmebilanz vor, so wird ein entsprechender Ladeluftteilstrom durch den Bypassleitungszweig 17 in Richtung des Einlasses der Brennkraftmaschine weitergeleitet.

Dem Wärmeregler 9 ist ein Prioritätenalgorithmus der Zuschaltung der einzelnen Nutzaggregate vorgegeben, nachdem der Wärmeregler 9 die Drosselventile 24 der jeweils zugeordneten Wärmetauscher einstellt, so daß die Versorgung wichtiger Nutzaggregate grundsätzlich sichergestellt ist.

In Durchströmungsrichtung hinter jedem Wärmetauscher 21₁₋₅ ist in den jeweiligen Leitungszweigen ein Temperatursensor 22 angeordnet, dessen Meßsignal T₁₋₅ dem Wärmeregler 9 angegeben wird. Aus den jeweiligen Temperaturen T₁₋₅ der von den Wärmetauschern 21₁₋₅ abströmenden Ladeluftteilströme bestimmt der Wärmeregler 9 die Wärmeverteilung auf die Nutzaggregate und die Einstellung der Drosselventile.

Der Ladeluftmassenstrom 11 wird vor dem Eintritt 2 in die Brennkraftmaschine 1 auf eine vorgegebene Einstrittstemperatur T_{E} gekühlt. Hinter dem Wärmeverteilungsabschnitt 20 der Ladeluftleitung ist ein Ladeluftkühler 15 angeordnet, welcher durch einen Kühlerbypass 16 der Ladeluftleitung 4 umgehbar ist. In dem Kühlerbypass 16 ist ein Bypassventil 26 angeordnet, welches von dem Wärmeregler 9 angesteuert wird und in seinem Drosselquerschnitt eingestellt wird. Durch die Einstellung des Drosselquerschnittes des Bypassventils 26 kann der durch den Ladeluftkühler 15 geleitete Ladeluftteilstrom gesteuert werden und die Temperatur der Ladeluft im Einlaß 2 der Brennkraftmaschine nach der Zusammenführung der Teilströme durch den Kühlerbypass 16 und dem Leitungszweig des Ladeluftkühlers 15 kann präzise auf die gewünschte Eintrittstemperatur T_{E} eingestellt werden. Die momentane Eintrittstemperatur T_{E} wird von einem Temperatursensor 27 im Einlaßtrakt 2 der Brennkraftmaschine 1 gemessen und dem Wärmeregler 9 eingegeben, welcher daraus Steuersignale für das Bypassventile 26 erzeugt. Gegebenenfalls kann der Ladeluftkühler vollständig umgangen werden, da die Kühlleistung der Wärmetauscher bereits ausreicht, um die erforderliche Eintrittstemperatur T_{E} der Ladeluft zu erreichen.

Der Wärmeregler 9 steuert weiterhin ein Abgasrückführungsventil 28, welches den Durchtrittsquerschnitt einer Abgasrückführungsleitung 13 bestimmt. Die Abgasrückführungsleitung 13 zweigt vor der Turbine 7 von der Abgasleitung 14 der Brennkraftmaschine ab und mündet vor dem Wärmeverteilungsabschnitt 20 in die Ladeluftleitung 4. Durch Öffnung des Abgasrückführungsventils 28 wird die Ladelufttemperatur durch die Einspeisung heißer Abgase weiter erhöht, wodurch bei höhem Wärmezufuhrbedarf aller Nutzaggregate die Wärmebilanz durch Öffnen des Abgasrückführungsventils 28 ausgleichbar ist. Die rückgeführten Abgase werden zur Reduzierung der Stickoxid-Emission der Brennkraftmaschine gekühlt, wobei zur Temperaturabsenkung nicht nur wie bisher der Ladeluftkühler zur Verfügung steht, sondern vielmehr die erfindungsgemäße Wärmeabfuhr über die Wärmeabtauscher zu den Nutzaggregaten herangezogen wird. Die Wärmeverteilungsregelung auf die Nutzaggregate wird so von dem Wärmeregler 9 über die Nutzung des Ladeluftkühlers 15, d, h. die Ansteuerung des Kühlerbypassventils 26 hinaus bei der Einregelung der Ansaugtemperatur auf den vorgegebenen Wert T_{E} eingesetzt.

Aus Gründen der besseren Übersicht sind in der Zeichnung die qualitativ unabhängig voneinander von dem Wärmeregler 9 erzeugten Stellsignale Dᵣ für die Drosselventile zusammengefaßt dargestellt.

## Patentansprüche

1. Verfahren zum Betrieb einer Brennkraftmaschine (1) mit einem Aogasturbolader (5), dessen Turbine (7) eine verstellbare Turbinengeometrie (6) aufweist und einen Verdichter (8) antreibt, welcher einen Ladeluftmassenstrom (11) durch eine Ladeluftleitung (4) zum Einlaß (2) der Brennkraftmaschine (1) fördert, wobei eine dem momentanen Luftdurchsatz der Brennkraftmaschine (1) entsprechende Kraftstoffmenge pro Arbeitsspiel zur Gemischbildung zugemessen wird und ein Lastregler (10) einen auf die Turbinengeometrie (6) einwirkenden Stellantrieb (12) ansteuert und die Turbinengeometrie (6) in eine betriebspunktspezifische Stellung bringt, wobei der Anströmquerschnitt auf die Turbine (7) mit zunehmender Betriebslast der Brennkraftmaschine (1) verringert wird,
dadurch gekennzeichnet, daß ein Wärmeregler (9) eine Wärmebilanz der von der Brennkraftmaschine (1) zu erzeugenden und im Betrieb benötigten Wärmemenge mit der verstellbaren Turbinengeometrie (6) als Regelungsstellglied überwacht, wobei zur Erhöhung der Wärmeabgabe der Brennkraftmaschine (1) der Anströmquerschnitt auf die Turbine (7) verringert wird.

2. Verfahren nach Anspruch 1,
dadurch gekennzeichnet, daß dem Wärmeregler (9) die Betriebstemperatur der Brennkraftmaschine (1) eingegeben wird und zur Ermittlung der Wärmebilanz herangezogen wird.

3. Verfahren nach Anspruch 1 oder 2,
dadurch gekennzeichnet, daß dem Ladeluftmassenstrom (11) von mindestens einem Wärmetauscher (21₁₋₅) Wärme entzogen und auf einen Arbeitsmittelstrom (23) übertragen wird, welcher einem Nutzaggregat für eine Heizanwendung zugeführt wird.

4. Verfahren nach Anspruch 3,
dadurch gekennzeichnet, daß der Wärmeregler (9) den Wärmebedarf des Nutzaggregates in die Ermittlung der Wärmebilanz einbezieht und durch Verstellung der Turbinengeometrie (6) die Temperatur der Ladeluft verändert.

5. Verfahren nach Anspruch 3 oder 4,
dadurch gekennzeichnet, daß der Wärmeregler (9) den Ladeluftdurchsatz des Wärmetauschers (21₁₋₅) bestimmt durch abgestimmte Einstellungen eines Drosselventils (24) im Zulauf des Wärmetauschers (21₁₋₅) und eines Bypassventils (25) in einem den Wärmetauscher (21₁₋₅) umgehenden Bypassleitungszweig (17).

6. Verfahren nach einem der Ansprüche 3 bis 5,
dadurch gekennzeichnet, daß der Ladeluftmassenstrom (11) vor dem Eintritt in die Brennkraftmaschine (1) auf eine vorgegebene Eintrittstemperatur (T_{E}) gekühlt wird, wobei der Wärmeregler (9) abhängig von der aktuellen Eintrittstemperatur (T_{E}) die anteilige Strömung der Ladeluft durch einen Ladeluftkühler (15) durch Einstellung des Durchtrittsquerschnittes eines den Ladeluftkühler (15) umgehenden Kühlerbypasses (16) bestimmt.

7. Verfahren nach einem der Ansprüche 3 bis 6,
dadurch gekennzeichnet, daß mehrere Nutzaggregate mit jeweils zugeordneten Wärmetauscher (21₁₋₅) vorgesehen sind, deren Wärmezufuhr unabhängig voneinander durch den Wärmeregler (9) eingestellt wird.

8. Verfahren nach Anspruch 7,
dadurch gekennzeichnet, daß der Wärmeregler (9) die anteilige Wärmezufuhr der Nutzaggregate durch Einstellung des Ladeluftdurchsatzes der jeweils zugeordneten Wärmetauscher (21₁₋₅) bestimmt.

9. Verfahren nach Anspruch 8,
dadurch gekennzeichnet, daß der Wärmeregler (9) die Drosselventile (24) der Wärmetauscher (21₁₋₅) nach einem vorgegebenen Prioritätenalgorithmus der Zuschaltung der jeweiligen Nutzaggregate einstellt.

10. Verfahren nach einem der Ansprüche 7 bis 9,
dadurch gekennzeichnet, daß dem Wärmeregler (9) aus den jeweiligen Temperaturen (T₁₋₅) der von den Wärmetauschern (21₁₋₅) abströmenden Ladeluftteilströme die Wärmeverteilung auf die Nutzaggregate und die Einstellung der Drosselventile (24) bestimmt.

11. Verfahren nach einem der Ansprüche 1 bis 10,
dadurch gekennzeichnet, daß der Wärmeregler (9) ein Abgasrückführungsventil (28) in einer vor den Wärmetauschern (21₁₋₅) in die Ladeluftleitung (4) einmündenden Abgasrückführungsleitung (13) ansteuert.

12. Verfahren nach einem der Ansprüche 1 bis 11,
dadurch gekennzeichnet, daß der Wärmeregler (9) dem Lastregler (10) die zur Wärmeerzeugung notwendige Zustellung der Turbinengeometrie (6) anzeigt und der Lastregler die Einstellung der Turbinengeometrie (6) mit optimalem Anströmquerschnitt auf die Turbine im Hinblick auf den Betriebszustand und die Wärmebilanz der Brennkraftmaschine (1) ermittelt und ein entsprechendes Stellsignal (18) für den Stellantrieb (12) der Turbinengeometrie (6) erzeugt.

13. Brennkraftmaschine mit einem Abgasturbolader (5), welcher eine Turbine (7) mit verstellbarer Turbinengeometrie (6) und einen von der Turbine (7) antreibbaren Verdichter (8) umfaßt, der in einer Ladeluftleitung (4) zum Einlaß (2) der Brennkraftmaschine (1) angeordnet ist, und mit einem Lastregler (10), welcher über eine Steuerleitung für ein Stellsignal (18) mit einem Stellantrieb (12) der Turbinengeometrie (6) verbunden ist und dem die Stellung der Turbinengeometrie (6) betriebspunktspezifisch vorgebbar ist, wobei der Anströmquerschnitt auf die Turbine (7) mit zunehmender Betriebslast der Brennkraftmaschine (1) verringert wird,
dadurch gekennzeichnet, daß in der Ladeluftleitung (4) hinter dem Verdichter (8) mindestens ein Wärmetauscher (21₁₋₅) angeordnet ist, dessen sekundärer Arbeitsmittelstrom (23) einem Nutzaggregat für eine Heizanwendung zugeführt wird.

14. Brennkraftmaschine nach Anspruch 13,
dadurch gekennzeichnet, daß der Wärmetauscher (21₁₋₅)in einem parallelen Leitungszweig der Ladeluftleitung (4) angeordnet ist, und daß in dem parallelen Leitungszweig und in einem den Wärmetauscher (21₁₋₅) umgehenden Bypassleitungszweig (17) jeweils ein Drosselventil (24, 25) angeordnet ist.

15. Brennkraftmaschine nach Anspruch 14,
dadurch gekennzeichnet, daß mehrere Nutzaggregate vorgesehen sind, denen jeweils ein Wärmetauscher (21₁₋₅) zugeordnet ist, welche in separaten Leitungszweigen angeordnet sind.

16. Brennkraftmaschine nach Anspruch 14 oder 15,
dadurch gekennzeichnet, daß die Drosselventile (24, 25, 26, 28) von einem Wärmeregler (9) aufeinander abgestimmt einstellbar sind.

17. Brennkraftmaschine nach Anspruch 16,
dadurch gekennzeichnet, daß der Wärmeregler (9) mit dem Lastregler über eine Signalleitung verbunden ist, über die dem Lastregler (10) zur Erhöhung der Ladelufttemperatur ein Signal des Wärmereglers (9) mit Aussage über die erforderliche Verringerung des Anströmquerschnitts der Turbine (7) eingebbar ist.

18. Brennkraftmaschine nach einem der Ansprüche 14 bis 17,
dadurch gekennzeichnet, daß in Durchströmungsrichtung hinter jedem Wärmetauscher (21₁₋₅) ein Temperatursensor (22) in dem jeweiligen Leitungszweig angeordnet ist, der an die Eingangsseite des Wärmereglers (9) angeschlossen ist.

19. Brennkraftmaschine nach einem der Ansprüche 13 bis 18,
dadurch gekennzeichnet, daß in Durchströmungsrichtung hinter einem die parallelen Leitungszweige der Wärmetauscher (21₁₋₅) aufweisenden Verteilerabschnitt (20) der Ladeluftleitung (4) ein Ladeluftkühler (15) angeordnet ist sowie ein den Ladeluftkühler (15) umgehender Kühlerbypass (16) ausgebildet ist.

20. Brennkraftmaschine nach Anspruch 19,
dadurch gekennzeichnet, daß in dem Kühlerbypass (16) ein Bypassventil (26) angeordnet ist, welches von dem Wärmeregler (9) einstellbar ist.
